# EUROPEAN PATENT APPLICATION

(11) **EP 2 159 884 A1**
(43) Date of publication of application: **03.03.2010**
(21) Application number: 08015315.8
(22) Date of filing: 29.08.2008
(51) Int. Cl.: H01R 12/22, G06K 7/00

(54) **Laminated low profile connector for chip cards**

(71) Applicant: Tyco Electronics Nederland B.V., 5222 AR 's-Hertogenbosch (NL)
(72) Inventor: Otter, Johannes Marinus Jacobus den, 5244 GK Rosmalen (NL)
(74) Representative: Grünecker, Kinkeldey, Stockmair & Schwanhäusser Anwaltssozietät

(57) **Abstract**

This invention generally relates to the art of electrical connectors and, in particular, to an electric connector for electrically connecting at least one planar contact area of a chip card to an electronic component, for instance, for connecting a SIM card in an IC card reader system in a cellular phone or the like. According to the present invention, an electric connector (100, 200) for electrically connecting at least one planar contact area of a chip card to an electronic component comprises at least one resilient electrically conductive contact element (102, 202) with a contact portion (106, 206) being adapted for establishing a releasable electrical contact to the at least one contact area of the chip chard. The contact element further comprises a connecting portion (110, 210) that is adapted for being connecting to a terminal of the electronic component. A foil-shaped carrier (104, 204) is provided to which the at least one contact element is affixed.

## Description

This invention generally relates to the art of electrical connectors and, in particular, to an electric connector for electrically connecting at least one planar contact area of a chip card to an electronic component. Such a chip card connector, also called IC card connector, can be used for connecting an IC card, especially a SIM card, in an IC card reader system in a cellular phone or the like.

IC cards have been developed and contain ICs (integrated circuits) including memory circuits, such as random access memories (RAM) and control circuits, such as CPU (central processing units). A special type of IC card, called a SIM card (subscriber identification module card) is of increasing interest and is used in cellular phones as an identification and storage unit for subscriber related data. SIM cards normally include a terminal array for connection through a card reader system to the external equipment. The connector usually includes some form of IC card socket and a plurality of electrodes or contacts exposed in the socket for engaging the terminal array of the IC card. The card is inserted and removed from the socket, and the connector contacts normally are resilient or comprise spring type contacts for yieldingly engaging the terminal array of the card when the card is inserted into the socket.

With the ever increasing miniaturization of IC cards and their respective connectors, various problems continue to arise. Firstly, the connector has to be as flat as possible in order to require less space. In addition, the terminal array on the card can be contaminated or soiled which can result in incomplete connections between the terminal array on the card and the contacts of the connector which in turn results in incomplete or intermittent connections to the external equipment. Any contamination on the contacts of the connector or the chip card as occurring during normal use from dirt, contaminants, oxidization, or due to touching the contacts by the user may cause a deterioration of the electrical properties of the contacts.

The problem underlying the present invention is therefore to provide a miniature chip card connector, in particular SIM card connector, which is providing a reliable contact between the IC card and the connector and which is simple to manufacture and assemble.

This object is solved by the subject matter of the independent claims. Advantageous developments of the electric connector according to the present invention and, furthermore, of a method for fabricating such a connector are the subject matter of the dependent claims.

According to the present invention, an electric connector for electrically connecting at least one planar contact area of a chip card to an electronic component comprises at least one resilient electrically conductive contact element with a contact portion being adapted for establishing a releasable electrical contact to the at least one contact area of the chip chard. The contact element further comprises a connecting portion that is adapted for being connecting to a terminal of the electronic component. A foil-shaped carrier is provided to which the at least one contact element is affixed.

This connector has a particularly low profile and can be fabricated in a very simple manner. According to an advantageous embodiment of the present invention, the foil-shaped carrier is formed by at least one laminate foil, so that the contact element can be fixed to the carrier by means of a laminating process. This allows a particularly simple and fully automated assembly of the connector. Furthermore, the laminated carrier can be held on stock for a reel-to-reel process.

In order to ensure a particularly firm contact and improved stability of the assembled electric contact elements, same can be laminated between two laminate foils forming the carrier. The laminate foil can for instance be fabricated from a glass fiber filled epoxy resin in order to withstand the elevated temperatures that occur when soldering the connector to a printed circuit board to the electronic component. However, it is clear that all known materials for laminate foils can be employed with the present invention, such as for instance Kapton foil, which also can resist the temperature during the soldering process.

A particularly cost effective way of fabricating the contact element is forming same as a stamped and bent metal part from a metal sheet. By this means a variety of material characteristics such as the elastic properties and the electric contact characteristics can be chosen appropriately. Furthermore, additional layers such as gold can be applied for enhancing the surface quality of the contact element.

Due to vibrations and environmental conditions, the quality of the electric contact between the at least one planar contact area and the contact portion of the contact element can deteriorate. Therefore, high contact forces for pressing the resilient contact element onto the planar contact area are desirable. According to an advantageous embodiment of the present invention, the electric connector comprises a latch element that holds the contact element in a mechanically preloaded state when not in contact with the planar contact area of the chip card. This leads to much higher contact forces than this can be achieved by an unloaded spring contact.

In a particularly easy way this latch element can be formed integrally with the contact element, for instance by stamping and bending same from the metal sheet.

A particularly secure electric contact can be achieved by forming the contact element in an essentially V-shaped form and arranging the contact portion and the connecting portion on opposing end regions of the legs of said V-shape. Thus, the contact pressure is exerted simultaneously to the contact portion and to the connecting portion, thereby improving the mechanical stability of the electric connector.

According to an advantageous embodiment of the present invention, a method of fabricating an electric connector for electrically connecting at least one planar contact area of a chip card to an electronic component comprises the steps of providing at least one resilient contact element and a fixing/affixing said to the foil-shaped carrier. This is a very easy and fully automated way of producing a low profile connector of this kind. The foil-shaped carrier can be a laminate foil and the contact element may be affixed to the laminate foil by a laminating process, i. e. by applying heat and pressure. In a preassembled state a plurality of the connectors can be stocked on a reel and separated for mounting the connector for instance to a printed circuit board. In case a mechanically preloaded contact element is used, preloading can be performed either before or after the laminating process.

According to a further advantageous embodiment, a first group of contact elements is first laminated to a first carrier element and at least two of these first carrier elements are subsequently joined by laminating them to a second carrier element which is also formed by a laminate foil. In case of a conventional SIM card connector, three contacts can be assembled on a smaller first carrier and two of these triple contacts may be joined to form the standard connector comprising six contacts.

By forming the contact elements with a V-shape, the area which is covered by the connector can be reduced significantly. This is important for miniaturized portable devices, such us mobile telephones.

In the shown embodiments, the connecting portion of the contact elements is adapted to be soldered to terminals of an electronic component. However, other means for fixing the connector to a circuit substrate are also possible. For instance, the connector could be fixed by means of an adhesive, a plug connection, or a press-on cover additionally provided for holding and fixing the chip card.

The accompanying drawings are incorporated into and form a part of the specification for the purpose of explaining the principles of the invention. The drawings are not to be construed as limiting the invention to only the illustrated and described examples of how the invention can be made and used. Further features and advantages will become apparent from the following and more particular description of the invention as illustrated in the accompanying drawings, wherein:
**Fig. 1** shows a perspective view of an electric connector according to a first embodiment;
**Fig. 2** shows a perspective view of the connector of Figure 1 turned by 180 degrees;
**Fig. 3** shows a detail of Figure 1;
**Fig. 4** shows a perspective view of a second embodiment of the electric connector;
**Fig. 5** shows a perspective view of the connector of Figure 4 turned by 180 degrees;
**Fig. 6** shows a detail from the connector of Figure 4.

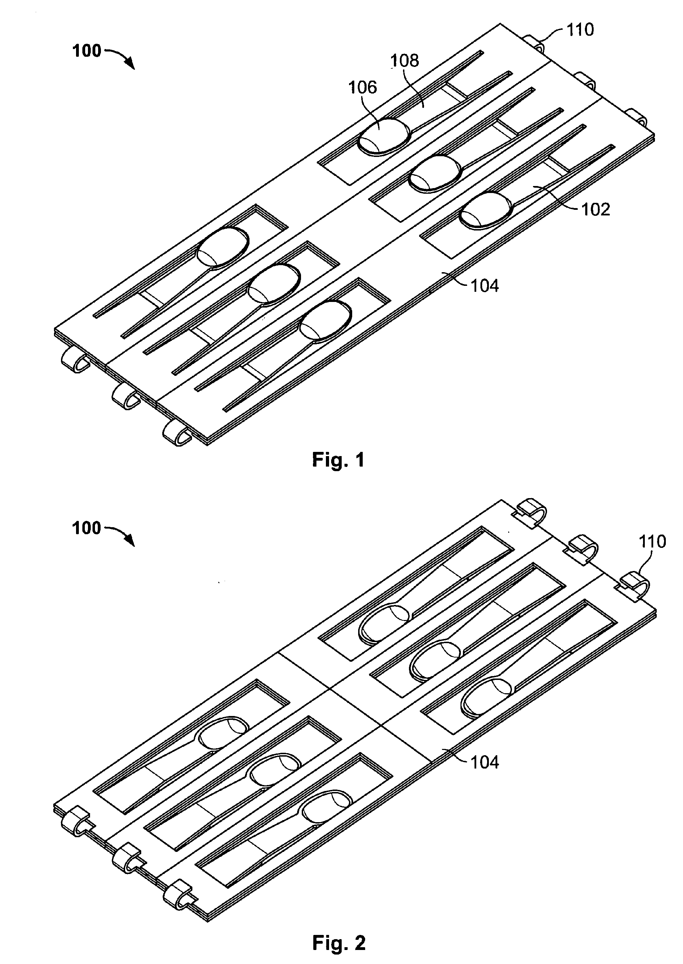

With reference to Figure 1, a first advantageous embodiment of a connector according to the present invention will be described. The connector 100 is adapted to establish an electric connection between the six planar contact areas of a conventional SIM card to a printed circuit board, for instance within a mobile telephone. The connector 100 comprises six resilient electrically conductive contact elements 102. A flexible foil-shaped carrier 104 holds the contact elements 102 to form the connector 100. According to the present invention, this foil-shaped carrier 104 is formed by two laminated foils which are covering parts of the contact elements from both sides.

Each contact element 102 has a contact portion 106 for establishing a releasable electrical contact to the contact area of the chip card in the shown embodiment the contact portion 106 has a convex shape in order to ensure a secure electrical contact to the chip card. The contact portion is held via a spring arm 108 in the carrier 104. A connecting portion 110 is adapted to be soldered to a printed circuit board. Of course, the connecting portion could also be formed as a pin for being plugged into the printed circuit board.

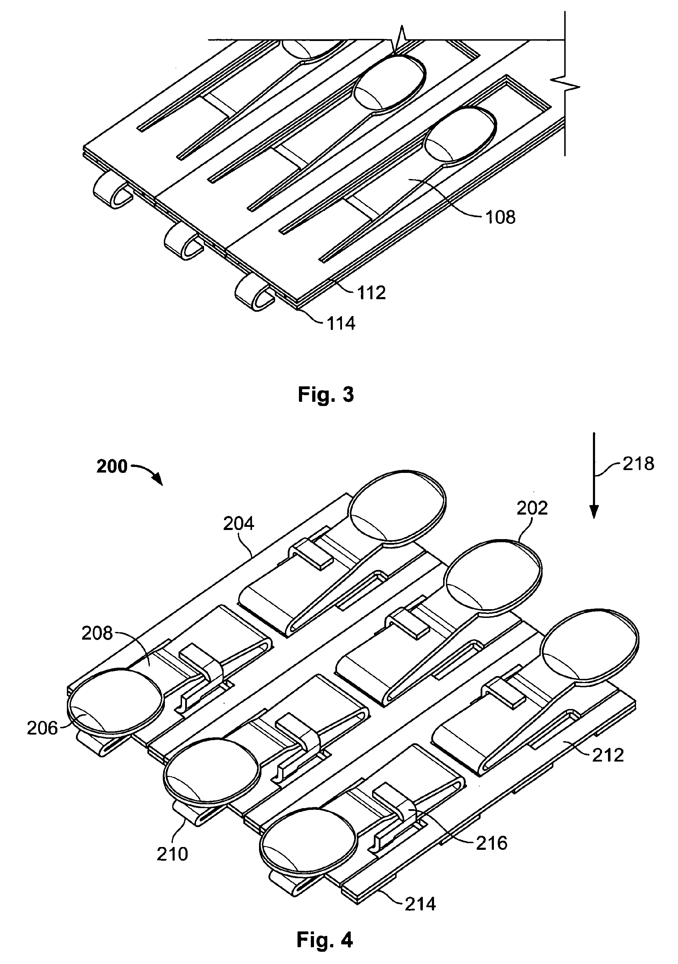

Figure 2 shows the connector of Figure 1 turned by 180 degrees and Figure 3 shows a detail of Figure 1 wherein the contact elements are enlarged. As can be seen from Figure 3, according to this embodiment the contact elements 102 are held by an upper 112 and a lower laminate foil layer 114. The spring arms 108 are cut free in order to allow movement and electric contact when contacting a SIM card.

An advantage of the connector arrangement according to Figures 1 to 3 can be seen in the very easy and cost effective fabrication. The height of this connector is reduced significantly for instance in comparison to a an over molded connector. However, the connector 100 with its elongate shape has the disadvantage that the opposing connecting portions of the two rows of contact elements 102 is rather large and that therefore the underlying printed circuit board must have a certain minimum size.

Furthermore, the electric contact might be not satisfactory, because the elastic force of the spring arm 108 can be insufficient for pressing the contact portion 106 sufficiently firm to the planar contact areas of a chip card.

In order to overcome these problems, a connector 200 with mechanically preloaded contact elements 202 can be used. According to this embodiment, the contact elements 202 are formed in an essentially V-shaped manner, the contact portion 206 and the connecting portion 210 being arranged on opposing end regions of the legs of the V-shape. This geometry reduces significantly the area covered by the connector 200, because the distances between the connecting portions of 210 of two opposing rows of contacts are reduced. Furthermore, the contact elements 202 are mechanically pre-loaded by compressing them in the same direction as the pressure which will be exerted by the planar contact area of a chip card as symbolized by arrow 218.

A latch element 216 is bent down for holding the spring arm 208 in mechanically preloaded state.

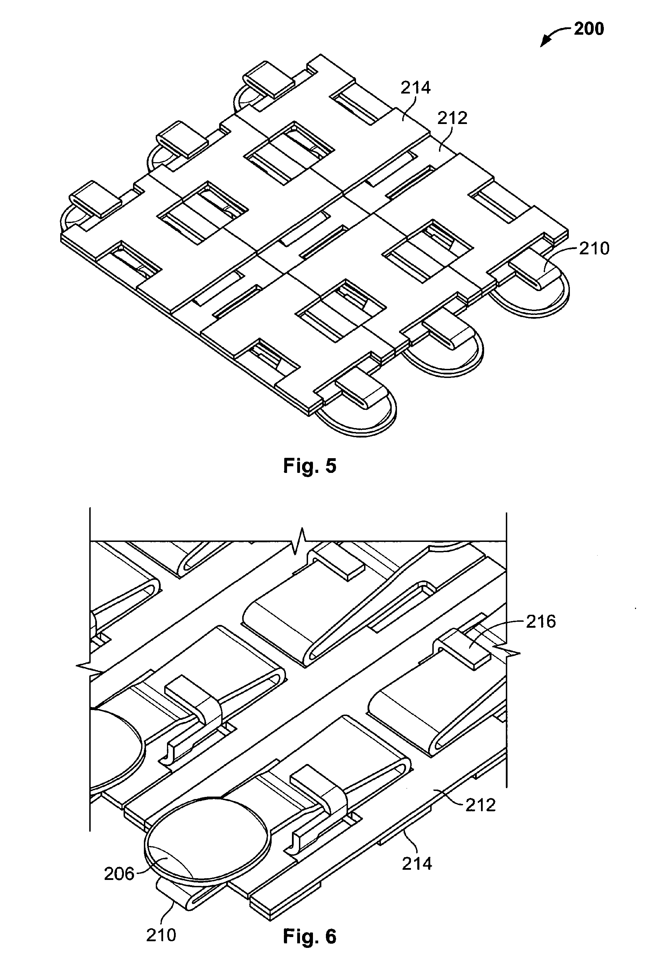

Figure 6 shows a detail of the mechanically preloaded connector 200 wherein the contact element 202 is enlarged. The latch element 216 is formed integrally as a stamped and bent tab.

As may be seen from Figures 4 and 5, the connector 200 is fabricated by first laminating three contact elements 202 of one row to a first carrier 214. Two of these preassembled first carriers are subsequently joint to each other by laminating same to a second carrier 212.

The laminated foil which forms the carriers is for instance fabricated of a glass fiber filled epoxy resin which can withstand the soldered temperature during the soldering process for connecting the connecting portions 210 to a printed circuit board of the electronic component.

By laminating spring contacts to a foil carrier a cost effective production method allowing a production in high volumes can be provided that also fulfills the requirements for a significantly smaller height dimension.

### Reference Numeral List:

- 100: connector according to first embodiment
- 102: resilient contact element
- 104: foil-shaped carrier
- 106: contact portion
- 108: spring arm
- 110: connecting portion
- 112: upper foil layer
- 114: lower foil layer
- 200: connector according to second embodiment
- 202: contact element
- 204: foil-shaped carrier
- 206: contact portion
- 208: spring arm
- 210: connecting portion
- 212: second carrier
- 214: first carrier
- 216: latch element
- 218: direction of mechanical preloading

## Claims

1. Electric connector for electrically connecting at least one planar contact area of a chip card to an electronic component, said connector (100, 200) comprising:
at least one resilient electrically conductive contact element (102, 202) with a contact portion (106, 206) being adapted for establishing a releasable electrical contact to the at least one contact area of the chip card, and with a connecting portion (110, 210) that is adapted for being connected to a terminal of the electronic component, and
a foil-shaped carrier (104, 204) to which the at least one contact element is affixed.

2. Electric connector according to claim 1, wherein said carrier (104, 204) is formed by at least one laminate foil and wherein the at least one contact element is fixed to the carrier by a laminating process.

3. Electric connector according to claim 2, wherein the at least one contact element is partly enclosed between two laminate foils (112, 114; 212, 214) forming the carrier.

4. Electric connector according to claim 2 or 3, wherein the laminate foil is fabricated from a glass fibre filled epoxy resin or from a Kapton foil.

5. Electric connector according to at least one of the preceding claims, wherein the contact element (102, 202) is formed as a stamped and bent metal part from a metal sheet.

6. Electric connector according to at least one of the preceding claims, further comprising a latch element (216) for holding the contact element in a mechanically pre-loaded state when not in contact with said planar contact area.

7. Electric connector according to claim 6, wherein the latch element (216) is formed integrally with the contact element (102, 202).

8. Electric connector according to claim 7, wherein the contact element (102, 202) has an essentially V-shaped form, the contact portion (106, 206) and the connecting portion (110, 210) being arranged on opposing end regions of the legs of said V-shape.

9. Method of fabricating an electric connector for electrically connecting at least one planar contact area of a chip card to an electronic component, said method comprising the following steps:
providing at least one resilient electrically conductive contact element with a contact portion being adapted for establishing a releasable electrical contact to the at least one contact area of the chip card, and with a connecting portion that is adapted for being connected to a terminal of the electronic component;
affixing the at least one contact element to a foil-shaped carrier.

10. Method according to claim 9, wherein said carrier is formed by at least one laminate foil and wherein the at least one contact element is affixed to the carrier by performing a laminating process.

11. Method according to claim 10, wherein the at least one contact element is partly enclosed between two laminate foils forming the carrier.

12. Method according to claim 10 or 11, wherein the laminate foil is fabricated from a glass fibre filled epoxy resin.

13. Method according to at least one of the claims 9 to 12, wherein the contact element is formed by stamping and bending from a metal sheet.

14. Method according to at least one of the claims 10 to 14, further comprising the steps of:
mechanically pre-loading the at least one contact element by exerting pressure in a direction equivalent to a contact pressure exerted by the planar contact area of the chip card;
actuating a latch element for holding the contact element in the pre-loaded state.

15. Method according to at least one of the claims 10 to 13, wherein the step of affixing the at least one contact element to a foil-shaped carrier comprises:
laminating a first group of contact elements to a first carrier element;
joining at least two first carrier elements by laminating same to a second carrier element.

## Amended claims

### Amended claims in accordance with Rule 137(2) EPC.

**1.** Electric connector for electrically connecting at least one planar contact area of a chip card to an electronic component, said connector (100, 200) comprising:
at least one resilient electrically conductive contact element (102, 202) with a contact portion (106, 206) being adapted for establishing a releasable electrical contact to the at least one contact area of the chip card, and with a connecting portion (110, 210) that is adapted for being connected to a terminal of the electronic component, and
a foil-shaped carrier (104, 204) to which the at least one contact element is affixed, wherein said carrier (104, 204) is formed by at least one laminate foil and
wherein the at least one contact element is fixed to the carrier by a laminating process, said at least one contact element being partly enclosed between two laminate foils (112, 114; 212, 214) forming the carrier.

**2.** Electric connector according to claim 1, wherein the laminate foil is fabricated from a glass fibre filled epoxy resin or from a Kapton foil.

**3.** Electric connector according to at least one of the preceding claims, wherein the contact element (102, 202) is formed as a stamped and bent metal part from a metal sheet.

**4.** Electric connector according to at least one of the preceding claims, further comprising a latch element (216) for holding the contact element in a mechanically pre-loaded state when not in contact with said planar contact area.

**5.** Electric connector according to claim 4, wherein the latch element (216) is formed integrally with the contact element (102, 202).

**6.** Electric connector according to claim 5, wherein the contact element (102, 202) has an essentially V-shaped form, the contact portion (106, 206) and the connecting portion (110, 210) being arranged on opposing end regions of the legs of said V-shape.

**7.** Method of fabricating an electric connector for electrically connecting at least one planar contact area of a chip card to an electronic component, said method comprising the following steps:
providing at least one resilient electrically conductive contact element with a contact portion being adapted for establishing a releasable electrical contact to the at least one contact area of the chip card, and with a connecting portion that is adapted for being connected to a terminal of the electronic component;
affixing the at least one contact element to a foil-shaped carrier, wherein said carrier is formed by at least one laminate foil and wherein the at least one contact element is affixed to the carrier by performing a laminating process, in a way that the at least one contact element is partly enclosed between two laminate foils forming the carrier.

**8.** Method according to claim 7, wherein the laminate foil is fabricated from a glass fibre filled epoxy resin.

**9.** Method according to at least one of the claims 7 or 8, wherein the contact element is formed by stamping and bending from a metal sheet.

**10.** Method according to at least one of the claims 7 to 9, further comprising the steps of:
mechanically pre-loading the at least one contact element by exerting pressure in a direction equivalent to a contact pressure exerted by the planar contact area of the chip card;
actuating a latch element for holding the contact element in the pre-loaded state.

**11.** Method according to at least one of the claims 7 to 10, wherein the step of affixing the at least one contact element to a foil-shaped carrier comprises:
laminating a first group of contact elements to a first carrier element;
joining at least two first carrier elements by laminating same to a second carrier element.
